(19) Europäisches Patentamt
European Patent Office
Office européen des brevets

(11) **EP 2 430 391 B1**

(12) # FASCICULE DE BREVET EUROPEEN

(45) Date de publication et mention
de la délivrance du brevet:
**19.04.2017 Bulletin 2017/16**

(21) Numéro de dépôt: **10716365.1**

(22) Date de dépôt: **06.05.2010**

(51) Int Cl.:
***G01B 5/28*** *(2006.01)*

(86) Numéro de dépôt international:
**PCT/EP2010/056195**

(87) Numéro de publication internationale:
**WO 2010/130631 (18.11.2010 Gazette 2010/46)**

(54) **PROCEDE DE CARACTERISATION TACTILE DE TEXTURE DE SURFACE**

TASTOBERFLÄCHEN-TEXTURCHARAKTERISIERUNGSVERFAHREN

TACTILE SURFACE TEXTURE CHARACTERIZATION METHOD

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **11.05.2009 FR 0953107**

(43) Date de publication de la demande:
**21.03.2012 Bulletin 2012/12**

(73) Titulaire: **Commissariat à l'Énergie Atomique et aux Énergies Alternatives 75015 Paris (FR)**

(72) Inventeurs:
• **DE BOISSIEU, Florian**
**F-38130 Echirolles (FR)**
• **GODIN, Christelle**
**F-38190 Brignoud (FR)**

(74) Mandataire: **Ilgart, Jean-Christophe et al Brevalex 95, rue d'Amsterdam 75378 Paris Cedex 8 (FR)**

(56) Documents cités:
**WO-A1-2007/077175**

• **CHARLES W FOX ET AL: "Contact type dependency of texture classification in a whiskered mobile robot" AUTONOMOUS ROBOTS, KLUWER ACADEMIC PUBLISHERS, BO, vol. 26, no. 4, 18 mars 2009 (2009-03-18), pages 223-239, XP019670017 ISSN: 1573-7527**

• **BECCAI L ET AL: "Development and Experimental Analysis of a Soft Compliant Tactile Microsensor for Anthropomorphic Artificial Hand" IEEE / ASME TRANSACTIONS ON MECHATRONICS, IEEE SERVICE CENTER, PISCATAWAY, NJ, US, vol. 13, no. 2, 1 avril 2008 (2008-04-01), pages 158-168, XP011207610 ISSN: 1083-4435**

• **DE BOISSIEU F ET AL: "Texture exploration with an artificial finger" MATERIALS & SENSATIONS. ABSTRACTS. OCTOBER 22-24, 2008 - PAU, FRANCE,, [Online] 22 octobre 2008 (2008-10-22), page 12, XP009124203 Extrait de l'Internet: URL:http://www.2psm.fr/img/MS2008%20ABST RA CTS%20Draft%20Release.pdf> [extrait le 2009-10-14]**

• **KUNNYUN KIM ET AL: "A silicon-based flexible tactile sensor for ubiquitous robot companion applications" JOURNAL OF PHYSICS: CONFERENCE SERIES 48, INSTITUTE OF PHYSICS PUBLISHING, BRISTOL, GB, vol. 34, no. 1, 1 avril 2006 (2006-04-01), pages 399-403, XP020109636 ISSN: 1742-6596**

• **BECCAI L ET AL: "Design and fabrication of a hybrid silicon three-axial force sensor for biomechanical applications" SENSORS AND ACTUATORS A, ELSEVIER SEQUOIA S.A., LAUSANNE, CH, vol. 120, no. 2, 17 mai 2005 (2005-05-17), pages 370-382, XP025325091 ISSN: 0924-4247 [extrait le 2005-05-17]**

- BART J KANE ET AL: "A Traction Stress Sensor Array for Use in High-Resolution Robotic Tactile Imaging" JOURNAL OF MICROELECTROMECHANICAL SYSTEMS, IEEE SERVICE CENTER, PISCATAWAY, NJ, US, vol. 9, no. 4, 1 décembre 2000 (2000-12-01), XP011034591 ISSN: 1057-7157

- HOLLINS M ET AL: "The Coding of Roughness" CANADIAN JOURNAL OF EXPERIMENTAL PSYCHOLOGY, AMERICAN PSYCHOLOGICAL ASSOCIATION (PSYCARTICLES), vol. 61, no. 3, 1 septembre 2007 (2007-09-01), pages 184-195, XP009124199 ISSN: 1196-1961

**Description**

**DOMAINE TECHNIQUE**

L'invention concerne un procédé de caractérisation tactile de texture de surface permettant de définir les caractéristiques tactiles, au moyen de descripteurs mécaniques ou descripteurs tactiles, d'une surface plane ou non. L'invention peut s'appliquer à tous les domaines liés à la fabrication de produits dont les caractéristiques tactiles sont importantes. L'invention peut s'appliquer par exemple aux domaines de l'industrie papetière, textile, automobile, alimentaire ou encore cosmétique pour :

- estimer des sensations perçues par le consommateur pour un nouveau produit,
- vérifier les propriétés tactiles d'un produit après sa fabrication (contrôle qualité),
- évaluer la variation des perceptions tactiles en fonction de différentes compositions ou modes de fabrication du produit.

L'invention peut également s'appliquer au domaine de la robotique, pour doter un robot du sens du toucher, ou encore de la biomimétique, par exemple pour fabriquer des prothèses actives, ou encore réaliser des télé-opérations médicales pour rendre les sensations tactiles au chirurgien lors d'une opération à distance.

**ÉTAT DE LA TECHNIQUE ANTÉRIEURE**

Le document « Texture Exploration with an Artificial Finger » de F. de Boissieu et al., Materials & Sensations 2008, Pau, France, 22 au 24 octobre 2008, décrit la discrimination de différentes textures par l'utilisation d'un capteur d'efforts triaxial. La texture d'une surface est analysée en calculant les distances euclidiennes entre le spectre mesuré pour la texture analysée et les spectres moyens de différentes surfaces de test. On considère alors que la surface analysée appartient à la même catégorie que la surface de test dont le spectre moyen présente la plus petite distance euclidienne avec le spectre moyen de la surface analysée.
Ce procédé permet de réaliser une classification fine de textures dans des classes arbitraires. Toutefois, ce procédé ne permet pas de caractériser quantitativement les caractéristiques tactiles, telles que des valeurs de douceur ou de pégosité, d'un échantillon quelconque. De plus, ce procédé ne donne aucune relation (proximité des caractéristiques) entre les différentes classes. XP019670017 décrit un procédé de classification de textures de surface.

**EXPOSÉ DE L'INVENTION**

Un but de la présente invention est de proposer un procédé de caractérisation tactile de texture de surface permettant de réaliser une estimation des caractéristiques mécaniques fines de textures de surface et qui ne présente pas les inconvénients de l'art antérieur. Un but de la présente invention est également de proposer un procédé de caractérisation tactile de texture de surface réalisant une analyse de surface selon des critères tactiles humains par l'intermédiaire de valeurs d'un ou plusieurs descripteurs tactiles, ou descripteurs mécaniques.
Pour cela, la présente invention propose un procédé de caractérisation tactile de texture de surface tel que revendiqué dans la revendication indépendante de procédé 1.
Le procédé de caractérisation tactile de texture de surface utilise un capteur d'efforts, par exemple triaxial, protégé par un enrobage mou. Le procédé peut se décomposer en deux étapes :

- apprentissage de l'algorithme de calcul permettant d'estimer les caractéristiques tactiles d'une surface grâce à des signaux provenant de l'exploration d'une base d'échantillons dont les textures sont pré-caractérisées tactilement, c'est-à-dire dont les propriétés tactiles sont connues par avance, pour construire une fonction de transfert continue,
- utilisation de l'algorithme de calcul entraîné, c'est-à-dire de la fonction de transfert, pour en déduire les caractéristiques d'une nouvelle texture.

Ainsi, avec le procédé de caractérisation selon l'invention, on obtient donc un procédé permettant de caractériser tout type de surface et qui, grâce à la fonction de transfert continue déterminée par le procédé, permet de réaliser une caractérisation « continue » de différentes caractéristiques des surfaces par une ou plusieurs valeurs associées à un ou plusieurs des différents descripteurs tactiles, c'est à dire des valeurs de descripteurs tactiles. Une valeur d'un descripteur tactile est donc déterminée par l'intermédiaire d'une fonction de transfert continue définissant donc un intervalle de valeurs du descripteur tactile par rapport à un intervalle de valeurs d'un ou plusieurs paramètres représentatifs de la force mesurée par le capteur d'effort.
Ce procédé permet de s'approcher au mieux de l'appréciation tactile humaine, contrairement aux procédés de l'art antérieur qui déterminent qu'une surface analysée n'appartient nécessairement qu'à une seule catégorie de surface et/ou font appel à des valeurs discrètes pour caractériser une surface. L'invention apporte donc une bien meilleure précision dans la caractérisation de la surface considérée étant donné que l'utilisation d'une fonction continue offre potentiellement un infinité de valeurs pour chaque descripteur.
L'invention permet donc de déterminer un niveau d'un descripteur tactile sur une échelle continue, contrairement aux procédés de l'art antérieur réalisant une classification discrète d'un échantillon entre plusieurs descripteurs possibles.
La caractéristique tactile à évaluer peut être définie au moyen d'un ou de plusieurs descripteurs mécaniques, ou descripteurs tactiles, d'une sensation de toucher, chacun de ces descripteurs comprenant une plage de valeurs pouvant correspondre à une plage de valeurs d'un ou plusieurs paramètres d'un signal représentatif de cette surface calculé au cours du procédé.

Un tel procédé a notamment pour avantage de pouvoir être mis en oeuvre par un système de mesure présentant un faible encombrement et potentiellement peu coûteux. Il est notamment possible d'utiliser des descripteurs tactiles existants, par exemple fournis par une application particulière.

Le procédé permet notamment de caractériser une surface par les valeurs de plusieurs descripteurs tactiles, par exemple en déplaçant le capteur de manière tangentielle et normale par rapport à la surface, ce qui permet notamment de définir la rugosité de la surface ainsi que la dureté ou encore la nervosité présentée par cette surface. Chaque descripteur tactile est donc relié à une fonction de transfert continue permettant de caractériser au mieux la surface.

Le capteur pouvant faire partie d'un dispositif préhensible, l'invention peut permettre de caractériser des surfaces non planes et ceci indépendamment de l'épaisseur de l'objet caractérisé (par exemple : peau, tissus, intérieur de voiture).

Le procédé selon l'invention permet aussi de caractériser des fluides en le déplaçant en surface ou à l'intérieur de ces fluides, à condition d'avoir hermétiquement conditionné le capteur et sa connectique électrique, par exemple pour des produits alimentaires (exemple : mesure de l'onctuosité d'un yaourt) ou des produits cosmétiques (exemple : évaluation de la texture d'une crème).

La base de données d'apprentissage peut être obtenue par la mise en oeuvre, pour chaque descripteur tactile, des étapes suivantes :

- mesurer au moins une force perçue par le capteur d'efforts lors de déplacements relatifs dudit capteur par rapport à plusieurs surfaces différentes et représentatives de plusieurs valeurs du descripteur tactile,
- calculer plusieurs paramètres temporels et/ou fréquentiels des signaux de sortie délivrés par ledit capteur représentatifs de la force précédemment mesurée,
- générer la base de données d'apprentissage en répertoriant pour chacun des signaux de sortie délivrés par ledit capteur les valeurs des paramètres précédemment calculés et en les associant aux valeurs du descripteur tactile.

La fonction de transfert peut être déterminée à partir d'une partie des paramètres temporels et/ou fréquentiels de la base de données d'apprentissage préalablement sélectionnés parmi l'ensemble des paramètres temporels et/ou fréquentiels de la base de données d'apprentissage.

Les paramètres temporels et/ou fréquentiels peuvent être sélectionnés par la mise en oeuvre d'un algorithme de Gram-Schmidt.

La fonction de transfert peut être calculée par une régression linéaire par la méthode des moindres carrés ou par l'application d'un modèle de réseau de neurones de type perceptron multicouches.

La force mesurée par le capteur peut être une force tangentielle, ou une force de cisaillement parallèle, au déplacement relatif du capteur par rapport à la surface.

Le signal de sortie délivré par ledit capteur d'efforts peut être une tension proportionnelle à la force mesurée par le capteur qui est échantillonnée et numérisée préalablement au calcul des paramètres temporels et/ou fréquentiels.

Le ou les paramètres temporels du signal peuvent être choisis parmi une moyenne, un écart type, un moment d'ordre quelconque ou une pente à l'origine du signal, le ou les paramètres fréquentiels du signal pouvant être choisis parmi une pente, une moyenne ou la détermination de raies ou motifs spectraux de certaines bandes de fréquences du spectre du signal.

Le déplacement relatif du capteur d'efforts par rapport à la surface à caractériser peut être réalisé par des moyens automatisés de déplacement du capteur d'efforts sur la surface et/ou de la surface par rapport au capteur d'efforts.

Le capteur d'efforts peut être un capteur d'efforts triaxial, le signal de sortie délivré par le capteur d'efforts pouvant comporter trois composantes correspondant chacune à une mesure d'efforts selon une dimension, c'est-à-dire selon les axes d'un repère orthonormé.

Le capteur d'efforts peut comporter au moins une membrane déformable et une tige reliée mécaniquement à la membrane déformable et disposée au moins en partie dans une structure d'enrobage.

Le capteur d'efforts peut être disposé à une extrémité d'un corps préhensible d'un dispositif de caractérisation tactile de texture de surface.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

- la figure 1 représente un dispositif de caractérisation tactile de texture de surface utilisé dans un procédé de caractérisation tactile de texture de surface, objet de la présente invention, selon un mode de réalisation particulier,
- la figure 2 représente un capteur triaxial d'un dispositif de caractérisation tactile de texture de surface utilisé au cours d'un procédé de caractérisation tactile de texture de surface, objet de la présente invention, selon un mode de réalisation particulier,

- la figure 3 représente sous forme d'un schéma fonctionnel les étapes d'un procédé de caractérisation tactile de texture de surface, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

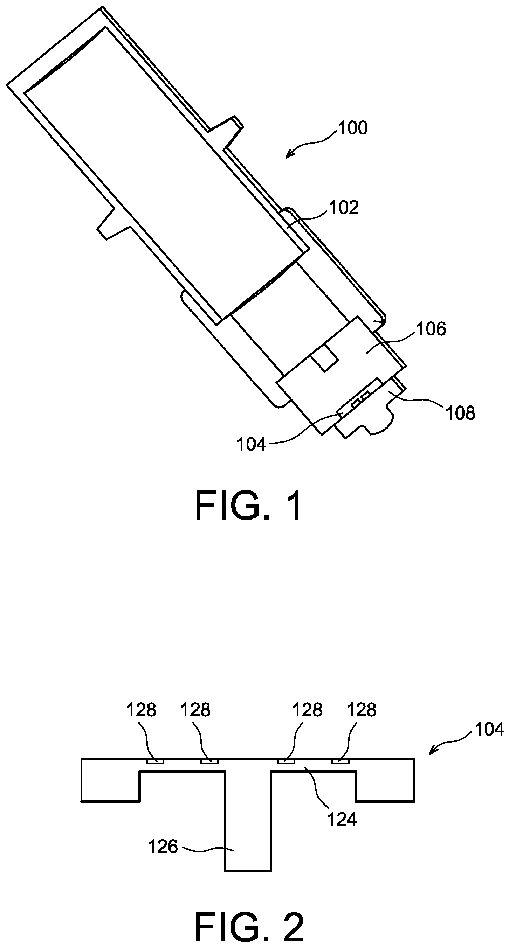

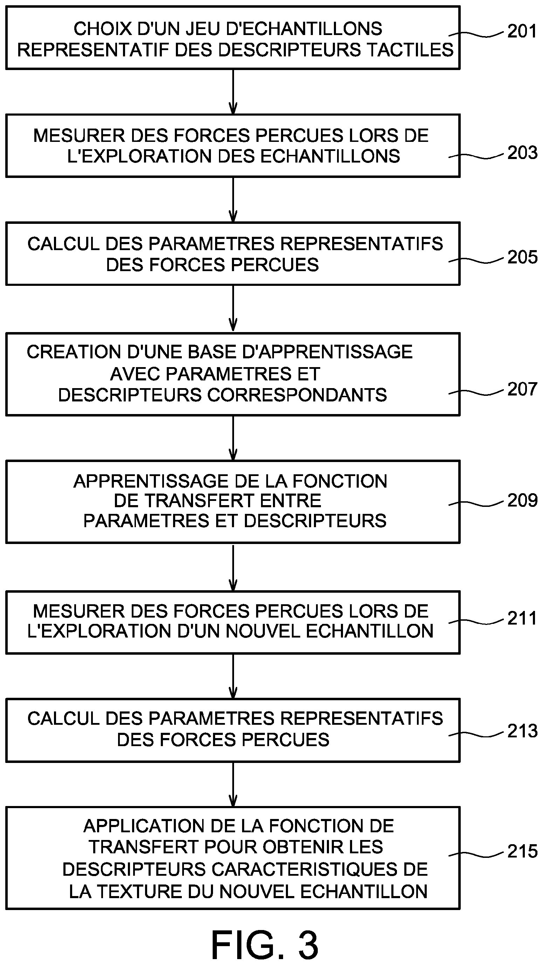

On se réfère tout d'abord à la figure 1 qui représente un dispositif de caractérisation tactile de texture de surface 100 utilisé au cours d'un procédé de caractérisation tactile de texture de surface selon un mode de réalisation particulier dont les différentes étapes sont représentées sur le schéma fonctionnel de la figure 3 et décrites ci-dessous de manière détaillée.

Le dispositif 100 est ici un doigt artificiel et comporte un corps préhensible 102. Le dispositif 100 comporte un capteur d'efforts triaxial 104, par exemple de type MEMS et à base de silicium. Le capteur 104, représenté de manière détaillée sur la figure 2, comporte une membrane déformable 124 et une tige 126 reliée mécaniquement au centre de la membrane déformable 124 et noyée dans une structure d'enrobage 108 recouvrant le capteur 104. La déformation de la membrane 124 par la tige 126, lorsque cette tige 126 est soumise à une force, est mesurée par des moyens de transduction 128, tels que des jauges de contraintes piézorésistives ou des détecteurs à variation de capacité, disposés sur la membrane 124. Dans ce mode de réalisation, le capteur 104 est encastré au niveau d'une face d'un support plan 106 à base d'un matériau dur, par exemple de l'époxy.

Le procédé fait également appel à des moyens pour déplacer le dispositif 100 sur la surface à étudier. Ces moyens permettent l'application du dispositif 100 sur la surface à analyser selon une certaine force normale et le déplacement tangentiel (selon une ou deux dimensions) du capteur sur la surface à caractériser.

Pour simplifier l'interprétation des signaux, au cours de ce déplacement, la force normale peut être maintenue constante. Ce maintien peut être assuré par un ressort qui permet alors d'amortir les variations topologiques de la surface explorée. En variante, il est également possible que ces moyens réalisent un déplacement de la surface à caractériser par rapport au dispositif 100.

La nature du déplacement relatif du dispositif 100, et plus particulièrement du capteur 104, par rapport à la surface à caractériser dépend de la nature des caractéristiques tactiles que l'on cherche à estimer. Par exemple, si l'on cherche à caractériser les variations topologiques de la surface analysée, on réalise alors un déplacement du capteur dans le plan de la surface étudiée, contre celle-ci, afin de réaliser la mesure d'au moins la force tangentielle reçue par le capteur lors de ce déplacement. On peut également faire des mesures en déplaçant le capteur selon la direction normale à la surface. On pourra ainsi évaluer des propriétés telles que la dureté et la nervosité d'un matériau.

Ces moyens de déplacement relatif du dispositif 100 par rapport à la surface à caractériser peuvent être éventuellement réalisés par une personne, le dispositif 100 étant déplacé manuellement sur la surface. Cette variante est particulièrement avantageuse si la surface à analyser n'est pas plane, comme par exemple lors d'une analyse de la peau du visage.

Lorsque le capteur est soumis à une force de contact, celui-ci fournit un signal sous la forme d'une tension qui est ensuite conditionnée au moyen d'une électronique, fournissant ainsi une tension proportionnelle à l'effort mesuré. Cette tension est ensuite échantillonnée, numérisée et enregistrée au moyen d'une carte d'acquisition par exemple. On obtient un signal temporel $s(t) = \{s(t0), ..., s(ti), ..., s(tn)\}$ composé ici de n échantillons. En fonction du type de mesure réalisée (déplacement tangentiel et/ou normal du capteur par rapport à la surface à caractériser), le signal temporel $s(t)$ peut être composé d'une, deux ou trois composantes ($s_X$, $s_Y$, $s_Z$) représentant chacune la mesure du capteur selon une dimension, c'est-à-dire selon un axe d'un repère orthogonal. Ainsi, à partir de ces trois composantes, il est possible de réaliser l'évaluation des caractéristiques tactiles souhaitées de la surface : par exemple, les composantes $s_X$ et $s_Y$ (composantes dans le plan de la surface analysée, correspondant à la mesure de la force tangentielle reçue sur le capteur) pourront être utilisées pour mesurer la rugosité de la surface, alors que la composante $s_Z$ (composante normale au plan de la surface analysée, correspondant à la mesure de la force normale reçue sur le capteur) pourra être utilisée pour mesurer la nervosité ou la dureté du matériau de la surface à caractériser.

Dans le procédé de caractérisation tactile de texture de surface mis en oeuvre ici, on cherche à caractériser la texture de la surface par une quantification d'une sensation tactile équivalente à celle ressentie par un sujet explorant du doigt cette surface. Le procédé fait appel à plusieurs descripteurs mécaniques, ou descripteurs tactiles, qui désignent une caractéristique tactile (mou, rapeux, doux, rugueux, ...). Le procédé qui est ici mis en oeuvre permet, en fonction des valeurs des mesures réalisées par le capteur, de déterminer les valeurs d'un ou plusieurs descripteurs tactiles qui correspondent le mieux pour décrire la surface analysée.

Le procédé de caractérisation tactile de texture de surface comporte tout d'abord une phase d'apprentissage. Pour chaque descripteur tactile, on choisit plusieurs échantillons de surface présentant des valeurs différentes et représentatives de l'échelle du descripteur tactile (étape 201). Par exemple, on peut utiliser des échantillons déjà gradués utilisés pour des tests psychophysiques. Les descripteurs tactiles utilisés pour obtenir la base de données d'apprentissage sont par exemple ceux d'un référentiel tactile comportant les descripteurs tactiles suivants :

- pour les mouvements orthogonaux à la surface : nervosité, collant, dureté, effet mémoire,
- pour les mouvements tangentiels à la surface : bloquant, relief, fibreux, râpeux, glissant.

Ainsi, pour chaque descripteur tactile noté $d_e$, on peut faire appel à E échantillons, chacun de ces échantillons étant associé une valeur du descripteur de avec e compris entre 1 et E, E étant un nombre entier supérieur ou égal à 2.

Pour chacun des E échantillons, on réalise l'acquisition par le dispositif 100 d'un signal représentatif de la force tangentielle et/ou de la force normale reçue par le capteur lors d'un déplacement du dispositif 100 sur cet échantillon (étape 203). Pour cela, on effectue un ou plusieurs passages, par exemple P passages (P étant un nombre entier supérieur ou égal à 1), du dispositif 100 sur chaque échantillon. Afin de s'affranchir de l'usure de l'enrobage, dans le cas de plusieurs passages, on évitera que ces P passages soient effectués sur chaque échantillon l'un après l'autre (P passages sur le premier échantillon, puis P passages sur le second échantillon, ...). De préférence, on réalise un premier passage sur chaque échantillon, puis un second passage sur chaque échantillon, .... Dans une variante, il est également possible de rendre aléatoire l'ordre de passage du capteur sur chacun des échantillons.

Ainsi, on obtient, pour chaque descripteur tactile, A (A = P x E) signaux temporels $s_a=\{s_a(t0), ..., s_a(tn)\}$ comportant chacun n échantillons, avec a compris entre 1 et A. Chaque signal obtenu est représentatif de l'échantillon utilisé pour son acquisition. Autrement dit, à chaque signal obtenu est associé un numéro d'échantillon e et un descripteur tactile $d_e$.

Pour chacun des signaux temporels obtenus, on calcule plusieurs paramètres prédéfinis de ces signaux, chaque paramètre reflétant le comportement temporel ou fréquentiels du signal sur une durée donnée de mesure (étape 205). Les paramètres reflétant le comportement temporel peuvent être par exemple les différents moments de ce signal (moyenne, écart type, ..., moment d'ordre N), la pente à l'origine, ou tout autre paramètre adapté. Les paramètres spectraux reflétant le comportement fréquentiel peuvent être par exemple la pente du spectre en dB, la moyenne du spectre en dB, ou encore la détermination des raies ou motifs spectraux de certaines bandes de fréquences (résonnances).

A chaque signal $s_a$ est donc associé un jeu de paramètres $p_a$ qui correspond donc à un vecteur dont la dimension correspond au nombre de paramètres calculés pour chaque signal.

On génère ensuite une base de données d'apprentissage répertoriant pour chaque échantillon les valeurs des paramètres calculés et les notations correspondantes connues des descripteurs tactiles (étape 207). Cette base de données d'apprentissage est constituée de l'ensemble des paramètres $p_a$ associés à leurs descripteurs tactiles, pour chaque signal.

On sélectionne ensuite les paramètres pertinents et on détermine une fonction de transfert, permettant d'associer aux valeurs de paramètres les valeurs des descripteurs tactiles (étape 209).

Une méthode de sélection des paramètres pertinents est par exemple l'application de l'algorithme de Gram-Schmidt. Cet algorithme consiste à sélectionner les paramètres les plus corrélés au descripteur tactile estimé.

Pour en facilité la compréhension, on appellera :

- X : la matrice des valeurs des paramètres (extraits à partir des échantillons de la base de données d'apprentissage), de taille égale à M x N, avec M le nombre d'observations et N le nombre de paramètres,
- y le vecteur des M valeurs correspondantes du descripteur tactile.

Cet algorithme étant récursif, les valeurs courantes de X et y sont respectivement appelées $X_i$ et $y_t$. On décrit ci-dessous les différentes étapes de ce procédé :

1. $X_i = X$ et $y_i = y$
2. Estimation de la corrélation entre les N vecteurs $x_{i,j}$ de $X_i$ et $y_i$ :

$$\sigma_i = \frac{\langle \vec{y_t}, \vec{x_{t,j}} \rangle}{\|\vec{x_{t,j}}\| \cdot \|\vec{y_t}\|}$$

où

$$\langle \vec{y_t}, \vec{x_{t,j}} \rangle$$

représente le produit scalaire entre $x_{i,j}$ et $y_i$ et $\|\|$ la norme de la variable considérée.

3. Sélection d'un paramètre c ayant le maximum de corrélation avec le descripteur.

4. Projection des paramètres et du descripteur dans l'espace orthogonal au paramètre choisi :

$$X_t = X_t - \frac{x_{t,c}}{\|x_{t,c}\|} \cdot \langle x_{t,c}, X_t \rangle$$

et

$$y_t = y_t - \frac{x_{t,c}}{\|x_{t,c}\|} \cdot \langle x_{t,c}, y_t \rangle .$$

Dans cet espace, le paramètre c choisi a donc une valeur nulle : $x_{t,c} = 0$.

5. Les étapes 2 à 4 sont répétées jusqu'à atteindre une valeur de corrélation minimum exigée ou jusqu'à un nombre Nc maximum de paramètres sélectionnés.

On obtient alors une sélection des paramètres les plus corrélés au descripteur. On appelle $X_c$ la matrice $M \times N_c$ des $N_c$ paramètres choisis.

Pour calculer la fonction de transfert entre les paramètres sélectionnés et le descripteur estimé, on peut appliquer un algorithme de régression linéaire par la méthode des moindres carrés. Cet algorithme consiste à évaluer les paramètres optimaux d'un modèle linéaire du type $y = Z \cdot \beta + \varepsilon$ avec $Z = [X_c\ 1]$ (de dimension $M \times (N_c + 1)$), $\beta$ le vecteur de dimension $(N_c + 1) \times 1$ des paramètres du modèle linéaire, et $\varepsilon$ l'écart au modèle. L'objectif de l'algorithme des moindres carrés consiste à minimiser la somme des erreurs quadratiques pour chaque observation. Cette somme est donnée par l'équation :

$$\chi^2(\beta) = \frac{1}{M} \sum_{i=1}^{M} (y_i - z_i \cdot \beta)^2$$

La solution de ce problème peut s'écrire :

$$\beta = \left( Z^T Z \right)^{-1} Z^T y$$

Pour des modèles non-linéaires (modèles polynomiaux, ou les modèles de réseaux de neurones de type perceptron multicouches), les paramètres pourront également être trouvés en cherchant le minimum de l'erreur quadratique moyenne.

Dans une variante, on peut utiliser une méthode de validation, réservant une partie de la base de données d'apprentissage à l'apprentissage proprement dit et l'autre partie à la vérification du pouvoir de prédiction de ce système.

Après avoir mis en oeuvre cette phase d'apprentissage, on peut réaliser la caractérisation de la surface que l'on souhaite analyser. Pour cela, on réalise donc une ou plusieurs mesures de la force tangentielle et/ou normale perçue par le capteur d'effort lors d'un déplacement du capteur sur la surface à caractériser (étape 211).

On calcule ensuite un ou plusieurs paramètres temporels et/ou fréquentiels du ou des signaux de sortie du capteur (étape 213). A partir de ce ou ces paramètres, on peut donc déterminer la valeur d'au moins un descripteur tactile de ladite surface à caractériser par l'application de la fonction de transfert sur le ou les paramètres précédemment calculés (étape 215). On obtient alors le ou les descripteurs tactiles correspondant à la surface à caractériser.

## Revendications

1. Procédé de caractérisation tactile de texture de surface comportant au moins les étapes suivantes :

- mesurer (211) au moins une force perçue par un capteur d'efforts (104) lors d'un déplacement relatif dudit capteur (104) par rapport à une surface à caractériser,
- calculer (213) un ou plusieurs paramètres temporels et/ou fréquentiels d'un signal de sortie délivré par ledit capteur (104) représentatif de la force précédemment mesurée,
- déterminer (215) une valeur d'un descripteur tactile d'une pluralité de descripteurs tactiles par l'applicatior sur le ou les paramètres précédemment calculés, d'une fonction de transfert continue définissant un intervalle de valeurs du descripteur tactile par rapport à un intervalle de valeurs du ou des paramètres précédemnent calculés, la fonction de transfert étant préalablement déterminée par régression à partir d'une base de données d'apprentissage associant, pour chaque descripteurs, plusieurs valeurs du descripteur tactile considéré à plusieurs valeurs d'un ou plusieurs paramètres temporels et/ou fréquentiels calculés à partir de mesures réalisées par le capteur d'efforts (104) sur plusieurs surfaces de test représentatives de valeurs du descripteur tactile considéré,

et dans lequel la base de données d'apprentissage est obtenue par la mise en oeuvre, pour chaque descripteur tactile, des étapes suivantes :

- mesurer (203) au moins une force perçue par le capteur d'efforts (104) lors de déplacements relatifs dudit capteur (104) par rapport à plusieurs surfaces différentes et représentatives de plusieurs valeurs du descripteur tactile,

- calculer (205) plusieurs paramètres temporels et/ou fréquentiels des signaux de sortie délivrés par ledit capteur représentatifs de la force précédemment mesurée,
- générer (207) la base de données d'apprentissage en répertoriant pour chacun des signaux de sortie délivrés par ledit capteur (104) les valeurs des paramètres précédemment calculés et en les associant aux valeurs du descripteur tactile.

2. Procédé selon la revendication 1, dans lequel la fonction de transfert est déterminée à partir d'une partie des paramètres temporels et/ou fréquentiels de la base de données d'apprentissage préalablement sélectionnées parmi l'ensemble des paramètres temporels et/ou fréquentiels de la base de données d'apprentissage (209).

3. Procédé selon la revendication 2, dans lequel les paramètres temporels et/ou fréquentiels sont sélectionnés par la mise en oeuvre d'un algorithme de Gram-Schmidt.

4. Procédé selon l'une des revendications précédentes, dans lequel la fonction de transfert est calculée par une régression linéaire par la méthode des moindres carrés ou par l'application d'un modèle de réseau de neurones de type perceptron multicouches.

5. Procédé selon l'une des revendications précédentes, dans lequel la force mesurée par le capteur est une force tangentielle au déplacement relatif du capteur d'efforts (104) par rapport à la surface.

6. Procédé selon l'une des revendications précédentes, dans lequel le signal de sortie délivré par ledit capteur d'efforts (104) est une tension proportionnelle à la force mesurée par le capteur qui est échantillonnée et numérisée préalablement au calcul des paramètres temporels et/ou fréquentiels.

7. Procédé selon l'une des revendications précédentes, dans lequel le ou les paramètres temporels du signal sont choisis parmi une moyenne, un écart type, un moment d'ordre quelconque ou une pente à l'origine du signal, le ou les paramètres fréquentiels du signal étant choisis parmi une pente, une moyenne ou la détermination de raies ou motifs spectraux de certaines bandes de fréquences du spectre du signal.

8. Procédé selon l'une des revendications précédentes, dans lequel le déplacement relatif du capteur d'efforts (104) par rapport à la surface à caractériser est réalisé par des moyens automatisés de déplacement du capteur d'efforts (104) sur la surface et/ou de la surface par rapport au capteur d'efforts (104).

9. Procédé selon l'une des revendications précédentes, dans lequel le capteur d'efforts (104) est un capteur d'efforts triaxial, le signal de sortie délivré par le capteur d'efforts comportant trois composantes correspondant chacune à une mesure d'efforts selon une dimension.

10. Procédé selon l'une des revendications précédentes, dans lequel le capteur d'efforts (104) comporte au moins une membrane déformable (124) et une tige (126) reliée mécaniquement à la membrane déformable (124) et disposée au moins en partie dans une structure d'enrobage (108).

11. Procédé selon l'une des revendications précédentes, dans lequel le capteur d'efforts (104) est disposé à une extrémité d'un corps (102) préhensible d'un dispositif (100) de caractérisation tactile de texture de surface.

**Patentansprüche**

1. Verfahren zur taktilen Charakterisierung von Oberflächentexturen, umfassend wenigstens die folgenden Schritte:

- Messen (211) von wenigstens einer Kraft, welche durch einen Kraftsensor (104) erfasst wird, während einer relativen Verlagerung des Sensors (104) bezüglich einer zu charakterisierenden Oberfläche,
- Berechnen (213) eines oder mehrerer Zeit- und/oder Frequenzparameter eines Ausgangssignals, welches durch den Sensor (104) geliefert wird, welches die zuvor gemessene Kraft repräsentiert,
- Bestimmen (215) eines Werts eines taktilen Deskriptors aus einer Mehrzahl von taktilen Deskriptoren durch die Anwendung einer kontinuierlichen Transferfunktion auf den oder die zuvor berechneten Parameter, welche ein Werteintervall des taktilen Deskriptors bezüglich einem Werteintervall des oder der zuvor berechneten Parameter definiert, wobei die Transferfunktion zuvor durch Regression ausgehend von einer Basis von Lerndaten für jeden Deskriptor bestimmt wird, welche für jeden Deskriptor mehrere Werte des betrachteten taktilen Deskriptors mehreren Werten des einen oder der mehreren Zeit- und/oder Frequenzparametern zuordnet, welche ausgehend von den von dem Kraftsensor (104) auf mehreren Testoberflächen, welche Werte des betrachteten taktilen Deskriptors repräsentieren, durchgeführten Messungen berechnet werden,

und wobei die Basis von Lerndaten erhalten wird, indem für jeden taktilen Deskriptor die folgenden Schritte ausgeführt werden:

- Messen (203) von wenigstens einer Kraft, welche von dem Kraftsensor (104) erfasst wird, während relativen Verlagerungen des Kraftsensors (104) bezüglich mehreren Oberflächen, welche verschieden sind und mehrere Werte des taktilen Deskriptors repräsentieren,

- Berechnen (205) von mehreren Zeit- und/oder Frequenzparametern der Ausgangssignale, welche von dem Sensor geliefert werden, welche die zuvor gemessene Kraft repräsentieren,

- Erzeugen (207) der Basis von Lerndaten durch Aufnehmen für jedes der von dem Sensor (104) gelieferten Ausgangssignale von Werten der zuvor berechneten Parameter und Assoziieren von ihnen mit Werten des taktilen Deskriptors.

2. Verfahren nach Anspruch 1, wobei die Transferfunktion ausgehend von einem Teil der Zeit- und/oder Frequenzparameter der Basis von Lerndaten bestimmt wird, welche zuvor aus der Menge der Zeit- und/oder Frequenzparameter der Basis von Lerndaten ausgewählt werden (209).

3. Verfahren nach Anspruch 2, wobei die Zeit- und/oder Frequenzparameter durch Ausführen eines Gram-Schmidt-Algorithmus ausgewählt werden.

4. Verfahren nach einem der vorhergehenden Ansprüche, wobei die Transferfunktion durch eine lineare Regression mit der Methode der kleinsten Quadrate oder durch die Anwendung eines Modells eines neuronalen Netzes vom Typ des mehrstufigen Perzeptrons berechnet wird.

5. Verfahren nach einem der vorhergehenden Ansprüche, wobei die von dem Sensor gemessene Kraft eine Kraft tangential zu der relativen Verlagerung des Kraftsensors (104) bezüglich der Oberfläche ist.

6. Verfahren nach einem der vorhergehenden Ansprüche, wobei das von dem Kraftsensor (104) gelieferte Ausgangssignal eine Spannung proportional zu der von dem Sensor gemessenen Kraft ist, welche vor der Berechnung der Zeit- und/oder Frequenzparameter aufgenommen und digitalisiert wird.

7. Verfahren nach einem der vorhergehenden Ansprüche, wobei der oder die Zeitparameter des Signals ausgewählt werden aus einem Mittelwert, einer Standardabweichung, einem Moment einer beliebigen Ordnung oder einer Steigung am Ursprung des Signals, wobei der oder die Frequenzparameter des Signals ausgewählt werden aus einer Steigung, einem Mittelwert oder der Bestimmung von Spektrallinien oder -mustern von bestimmten Frequenzbändern des Spektrums des Signals.

8. Verfahren nach einem der vorhergehenden Ansprüche, wobei die relative Verlagerung des Kraftsensors (104) bezüglich der zu charakterisierenden Oberfläche durch automatisierte Verlagerungsmittel des Kraftsensors (104) auf der Oberfläche und/oder der Oberfläche bezüglich dem Kraftsensor (104) durchgeführt wird.

9. Verfahren nach einem der vorhergehenden Ansprüche, wobei der Kraftsensor (104) ein triaxialer Kraftsensor ist, wobei das von dem Kraftsensor gelieferte Ausgangssignal drei Komponenten umfasst, welche jeweils einer Messung von Kräften entlang einer Dimension entsprechen.

10. Verfahren nach einem der vorhergehenden Ansprüche, wobei der Kraftsensor (104) wenigstens eine deformierbare Membran (124) und einen Stab (126) umfasst, welcher mechanisch an der deformierbaren Membran (124) angebracht und wenigstens teilweise in einer Ummantelungsstruktur (108) angeordnet ist.

11. Verfahren nach einem der vorhergehenden Ansprüche, wobei der Kraftsensor (104) an einem Ende eines Greifkörpers (102) einer Vorrichtung (100) zur taktilen Charakterisierung von Oberflächentexturen angeordnet ist.

**Claims**

1. A tactile surface texture characterisation method including at least the following steps:

- measuring (211) at least one force perceived by a force sensor (104) during a relative movement of said sensor (104) with respect to a surface to be characterised,

- calculating (213) one or more time and/or frequency parameters of an output signal transmitted by said sensor (104) representative of the previously measured force,

- determining (215) a value of a tactile descriptor of multiple tactile descriptors through application of a continuous transfer function to the one or more previously calculated parameters, wherein the transfer function defines an interval of values of the tactile descriptor relative to an interval of values of the one or more previously calculated parameters and is previously determined by regression from a learning database associating, for each descriptor, several values of the tactile descriptor with several values of one or more time and/or frequency parameters calculated from measurements made by the force sensor (104) on multiple test surfaces representative of values of the tactile descriptor in question,

and in which the learning database is obtained through implementation, for each tactile descriptor, of the following steps:

- measuring (203) at least one force perceived by the force sensor (104) during relative movements of said sensor (104) with respect to several different surfaces representing several values of the tactile descriptor,
- calculating (205) several time and/or frequency parameters of the output signals transmitted by said sensor representative of the previously measured force,
- generating (207) the learning database by listing for each of the output signals transmitted by said sensor (104) the values of the previously calculated parameters, and by associating them with the values of the tactile descriptor.

2. Method according to claim 1, in which the transfer function is determined from some of the time and/or frequency parameters of the learning database which have been previously selected from all the time and/or frequency parameters of the learning database (209).

3. Method according to claim 2, in which the time and/or frequency parameters are selected through the implementation of a Gram-Schmidt algorithm.

4. Method according to one of the previous claims, in which the transfer function is calculated by a linear regression by the method of least squares, or through the application of a neural network model of the multi-layer perceptron type.

5. Method according to one of the previous claims, in which the force measured by the sensor is a force tangential to the relative movement of the force sensor (104) with respect to the surface.

6. Method according to one of the previous claims, in which the output signal transmitted by the said force sensor (104) is a voltage proportional to the force measured by the sensor, which is sampled and digitised prior to calculating the time and/or frequency parameters.

7. Method according to one of the previous claims, in which the time parameter or parameters of the signal are chosen from among an average, a standard deviation, a moment of a given order, or a gradient at the origin of the signal, where the frequency parameter or parameters of the signal are chosen from among a gradient, an average or the determination of spectral lines or patterns of certain frequency bands of the signal's spectrum.

8. Method according to one of the previous claims, in which the relative movement of the force sensor (104) with respect to the surface to be characterised is made by automated means for moving the force sensor (104) over the surface and/or for moving the surface relative to the force sensor (104).

9. Method according to one of the previous claims, in which the force sensor (104) is a triaxial force sensor, and where the output signal transmitted by the force sensor includes three components, each one of which is a measurement of forces in one dimension.

10. Method according to one of the previous claims, in which the force sensor (104) includes at least one deformable membrane (124) and one rod (126) connected mechanically to the deformable membrane (124) and at least partly positioned in a coating structure (108).

11. Method according to one of the previous claims, in which the force sensor (104) is positioned at one end of a gripper body (102) of a device (100) for tactile surface texture characterisation.

FIG. 1

FIG. 2

CHOIX D'UN JEU D'ECHANTILLONS REPRESENTATIF DES DESCRIPTEURS TACTILES —— 201

MESURER DES FORCES PERCUES LORS DE L'EXPLORATION DES ECHANTILLONS —— 203

CALCUL DES PARAMETRES REPRESENTATIFS DES FORCES PERCUES —— 205

CREATION D'UNE BASE D'APPRENTISSAGE AVEC PARAMETRES ET DESCRIPTEURS CORRESPONDANTS —— 207

APPRENTISSAGE DE LA FONCTION DE TRANSFERT ENTRE PARAMETRES ET DESCRIPTEURS —— 209

MESURER DES FORCES PERCUES LORS DE L'EXPLORATION D'UN NOUVEL ECHANTILLON —— 211

CALCUL DES PARAMETRES REPRESENTATIFS DES FORCES PERCUES —— 213

APPLICATION DE LA FONCTION DE TRANSFERT POUR OBTENIR LES DESCRIPTEURS CARACTERISTIQUES DE LA TEXTURE DU NOUVEL ECHANTILLON —— 215

FIG. 3

**EP 2 430 391 B1**

## RÉFÉRENCES CITÉES DANS LA DESCRIPTION

**Littérature non-brevet citée dans la description**

- **F. DE BOISSIEU et al.** Texture Exploration with an Artificial Finger. *Materials & Sensations,* 24 Octobre 2008